# EUROPÄISCHE PATENTANMELDUNG

(11) **EP 0 622 260 A1**
(43) Veröffentlichungstag der Anmeldung: **02.11.1994**
(21) Anmeldenummer: 94106522.9
(22) Anmeldetag: 26.04.1994
(51) Int. Cl.: B60J 7/08, F16H 25/12, E05F 15/16

(54) **Vorrichtung zum Verstellen von bewegbaren Teilen an Fahrzeugen**

(30) Priorität: 29.04.1993 DE 4314146
(71) Anmelder: WEBASTO KAROSSERIESYSTEME GmbH, D-82131 Stockdorf (DE)
(72) Erfinder: Weimann, Thorsten, D-85774 Unterföhring (DE); Ulbrich, Thomas, D-86916 Kaufering (DE); Lang, Thomas, D-82319 Starnberg (DE)
(74) Vertreter: Wiese, Gerhard

(57) **Zusammenfassung**

Vorrichtung zum Verstellen von bewegbaren Teilen an Fahrzeugen, insbesondere von Scheiben, Hubdächern oder dergleichen, mit einer Teleskopwinde (15), die mindestens drei teleskopartig ineinander schraubbare Gewindeteile (16,17,18) aufweist, von denen mindestens zwei (16,17) Führungsstücke (31,33) tragen, die in Gewindegänge (32,34) jeweils eines anderen Gewindeteils eingreifen, wobei die Teleskopwinde antriebsseitig gegen eine axiale Verstellung gesichert und von Hand oder motorisch drehbar sowie abtriebsseitig gegen Drehung gesichert und an das bewegbare Fahrzeugteil (11) angekoppelt ist. Die Gewindesteigung aller mit einem Führungsstück (31,33) zusammenwirkenden Gewindegänge (32,34) der Teleskopwinde (15) ist über mindestens einen Teil ihrer Erstreckung derart ungleichförmig ausgebildet, daß die Kraft-/Weg-Kennlinie (45,46) der Teleskopwinde (15) an die beim Verstellen des bewegbaren Fahrzeugteils (11) auftretende Kraft-/Weg-Abhängigkeit angepaßt ist.

## Beschreibung

Die Erfindung betrifft eine Vorrichtung zum Verstellen von bewegbaren Teilen an Fahrzeugen, insbesondere von Scheiben, Hubdächern oder dergleichen, mit einer Teleskopwinde, die mindestens drei teleskopartig ineinander schraubbare Gewindeteile aufweist, von denen mindestens zwei Führungsstücke tragen, die in Gewindegänge jeweils eines anderen Gewindeteils eingreifen, wobei die Teleskopwinde antriebsseitig gegen eine axiale Verstellung gesichert und von Hand oder motorisch drehbar sowie abtriebsseitig gegen Drehung gesichert und an das bewegbare Fahrzeugteil angekoppelt ist.

Eine Vorrichtung dieser Art ist aus der DE-A-32 16 402 bekannt. Dieser und ähnlichen bekannten Vorrichtungen (DE-C-23 51 270, DE-C-26 45 288, DE-B-27 36 459, DE-C-40 32 951, DE-A-42 25 845 und EP-A-0 410 683) ist gemeinsam, daß die Führungsstücke als Schraubengewinde ausgestaltet sind, die mit komplementären Schraubengewinden des jeweils nächstfolgenden Gewindeteils zusammenwirken um eine eingangsseitige Drehbewegung in eine Translationsbewegung des angetriebenen bewegbaren Teils umzusetzen. Im Hinblick auf die steigenden Komfortbedürfnisse werden die Verstellvorrichtungen in zunehmendem Maße motorisch angetrieben. Dabei muß ein Kompromiß bezüglich der Motorleistung, der Verstellkraft und der Verstellgeschwindigkeit getroffen werden.

Daneben ist eine Vorrichtung zum Umsetzen der Drehbewegung einer Motorwelle in eine untersetzte Drehbewegung einer Abtriebswelle und eines mit letzterer drehfest verbundenen Schwenkung bekannt (DE-A-32 38 334), die im wesentlichen aus einer mit der Motorwelle verbundenen Gewindespindel, einer entlang der Gewindespindel verstellbaren Spindelmutter, einem feststehenden Führungszylinder und einem mit der Abtriebswelle fest verbundenen Antriebszylinder besteht. Dabei weist der Antriebszylinder einander diametral gegenüberliegende Längsschlitze auf, während der feststehende Führungszylinder mit einem schraubenförmigen Schlitz versehen ist. Die Spindelmutter trägt zwei radial abstehende Mitnahmearme, auf denen Kugellager sitzen, die in den Längsschlitzen bzw. dem schraubenförmigen Schlitz geführt sind. Während aller Verstellbewegungen bleibt die gegenseitige axiale Ausrichtung von Motorwelle, Spindel, Führungszylinder, Antriebszylinder, Abtriebswelle und Schwenkarm unverändert. Schon aus diesem Grunde wäre die bekannte Vorrichtung zum Umsetzen einer Drehbewegung in eine Translationsbewegung, wie sie beispielsweise für das Verstellen von Scheiben und Hubdächern in Fahrzeugen erforderlich ist, ungeeignet.

Der Erfindung liegt die Aufgabe zugrunde, eine Verstellvorrichtung zu schaffen, die es erlaubt, den vorstehend genannten Kompromiß bezüglich Motorleistung, Verstellkraft und Verstellgeschwindigkeit günstiger als bei bekannten Teleskopwinden-Verstellvorrichtungen zu gestalten, d.h. beispielsweise bei vorgegebener Schließkraft und vorgegebener Dauer für das Durchlaufen des gesamten Verstellweges den Einsatz eines Antriebes mit vergleichsweise niedriger Leistung zu ermöglichen.

Diese Aufgabe wird erfindungsgemäß dadurch gelöst, daß bei einer Verstellvorrichtung der eingangs genannten Art die Gewindesteigung aller mit einem Führungsstück zusammenwirkenden Gewindegänge der Teleskopwinde über mindestens einen Teil ihrer Erstreckung derart ungleichförmig ausgebildet ist, daß die Kraft-/Weg-Kennlinie der Teleskopwinde an die beim Verstellen des bewegbaren Fahrzeugteils auftretende Kraft-/Weg-Abhängigkeit angepaßt ist.

Die Erfindung geht von der Erkenntnis aus, daß bei Verstellvorrichtungen, wie sie für Ausstellfenster, Hubdächer und dergleichen an Fahrzeugen vorgesehen werden, in der Regel eine hohe translatorische Verstellkraft nur über einen relativ kleinen Teil des Gesamtverstellweges benötigt wird, nämlich in den genannten Beispielen für das Anpressen der Scheibe, eines Hubdachdeckels oder dergleichen an eine Dichtung beim Schließvorgang. Während des restlichen Teils des Verstellweges ist dagegen die notwendige Verstellkraft meist wesentlich kleiner. Im Gegensatz zu der über den vollen Verstellweg bekannter Teleskopwinden-Verstellvorrichtungen konstanten Gewindesteigung ist nun erfindungsgemäß diese Steigung in Anpassung an die benötigte Kraft-/Weg-Abhängigkeit ungleichförmig gestaltet, sodaß insbesondere eine hohe Verstellkraft - auf Kosten der Verstellgeschwindigkeit - nur dort erzeugt wird, wo sie tatsächlich benötigt wird, während in anderen Bereichen des Gesamtverstellweges nur eine dort ausreichende geringere Verstellkraft, dafür aber eine erhöhte Verstellgeschwindigkeit, bereitgestellt wird. Bei motorisch angetriebenen Verstellvorrichtungen kann infolgedessen ein Antriebsmotor mit vergleichsweise niedriger Leistung eingesetzt werden, um gleichwohl eine relativ hohe maximale Verstellkraft verbunden mit einer relativ kurzen Gesamtdauer für das Durchlaufen des gesamten Verstellweges zu erreichen. Aber auch bei handbetätigten Verstellvorrichtungen ist die erfindungsgemäße Lösung von Vorteil, weil die tatsächlich benötigten hohen Verstellkräfte nur ein relativ niedriges Antriebsdrehmoment erfordern und weil in Verstellbereichen, innerhalb deren Kleine Verstellkräfte ausreichen, verhältnismäßig hohe Verstellgeschwindigkeiten bei im wesentlichen gleichbleibendem Kraftaufwand für die Handbetätigung erzielt werden. Bei der aus mindestens drei ineinanderschraubbaren Gewindeteilen bestehenden Teleskopwinde wäre im übrigen nur mit erheblichem zusätzlichem Aufwand zu erreichen, daß die einzelnen Gewindeteile in einer vorbestimmten geordneten Abfolge ein- und ausfahren. Weil aber erfindungsgemäß alle mit einem Führungsstück zusammenwirkenden Gewindegänge der Teleskopwinde eine ungleichförmige Steigung zur Anpassung der Kraft-/Weg-Kennlinie der Teleskopwinde an die beim Verstellen des bewegbaren Fahrzeugteils auftretende Kraft-/Weg-Abhängigkeit aufweisen, ist ohne solche zusätzliche Maßnahme gewährleistet, daß z.B. eine benötigte hohe Verstellkraft am Ende des Gesamtverstellweges unabhängig davon bereitgestellt wird, welches Gewindeteil zuerst ein- oder ausgefahren wird.

Im Falle einer motorischen Verstellvorrichtung ist ferner die Auslegung so getroffen, daß die Teleskopwinde antriebsseitig normalerweise an einen Antriebsmotor angekuppelt ist, für eine Notbetätigung aber von dem Antriebsmotor abgekuppelt und von Hand verstellt werden kann. Ein besonders einfacher und platzsparender Aufbau wird dabei erhalten, wenn die Abtriebswelle des Antriebsmotors in ständigem Eingriff mit einem koaxial zu der Teleskopwinde angeordneten Zahnring steht, der normalerweise seinerseits mit der Teleskopwinde in Antriebsverbindung steht, jedoch zur Notbetätigung in eine Stellung verschiebbar ist, in welcher die Antriebsverbindung zwischen dem Zahnring und der Teleskopwinde unterbrochen ist, und wenn auf dem die Antriebsseite der Teleskopwinde bildenden äußersten Gewindeteil ein mit diesem Gewindeteil drehfest verbundener Handgriff axial verstellbar angeordnet ist, der mit dem Zahnring für eine Mitnahme in axialer Richtung gekuppelt ist, um den Zahnring wahlweise in oder außer Eingriff mit dem äußersten Gewindeteil zu bringen.

In weiterer Ausgestaltung der Erfindung ist die Verstellvorrichtung selbsthemmend ausgelegt. Dadurch wird erreicht, daß das in eine beliebige Stellung gebrachte bewegbare Teil unabhängig von auf dieses Teil einwirkenden Kräften, beispielsweise Windkräften, in der eingestellten Lage verharrt, bis die Verstellvorrichtung erneut betätigt wird. Ein Ausführungsbeispiel der Erfindung wird nachstehend anhand der Zeichnungen erläutert. Dabei zeigt:
- Fig. 1: in Draufsicht einen waagrechten Schnitt durch den hinteren Teil eines ausstellbaren Kraftfahrzeug-Seitenfensters mit zugeordneter Verstellvorrichtung,
- Fig. 2: die für die Verstellung eines solchen Ausstellfensters typischerweise aufzubringende Verstellkraft in Abhängigkeit von dem Verstellweg,
- Fig. 3: Kraft/Weg-Kennlinien der einen Teil der Verstellvorrichtung bildenden Teleskopwinde,

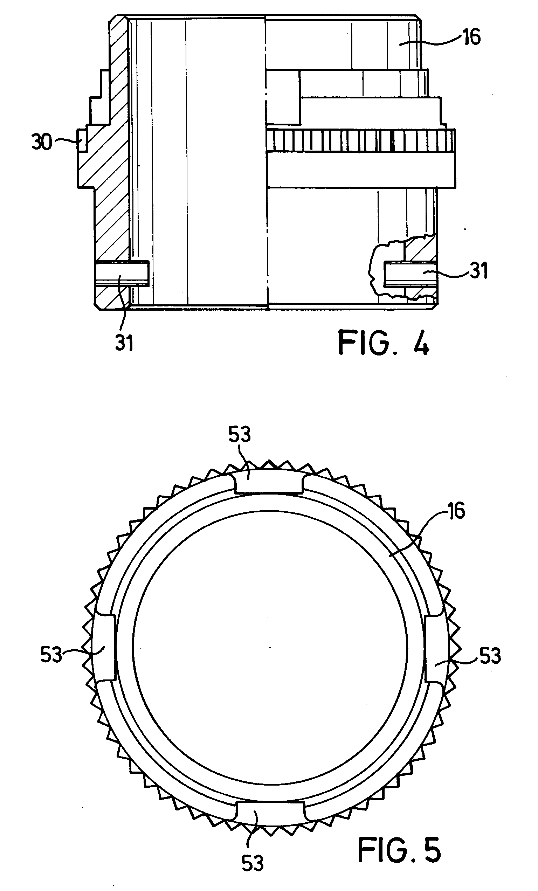

- Fign 4 u. 5: eine teilweise aufgeschnittene Seitenansicht und eine Draufsicht auf das äußerste Gewindeteil der Teleskopwinde,
- Fign. 6 u. 7: eine teilweise aufgeschnittene Seitenansicht und in gegenüber Fig. 6 verkleinertem Maßstab eine Abwicklung der Außenumfangsfläche des mittleren Gewindeteils der Teleskopwinde,
- Fign. 8 u. 9: eine teilweise aufgeschnittene Seitenansicht und eine Abwicklung der Außenumfangsfläche des innersten Gewindeteils der Teleskopwinde,
- Fig. 10: einen Schnitt, der Einzelheiten der Notbetätigung der Teleskopwinde erkennen läßt,
- Fig. 11: eine schematische Ansicht der Teleskopwinde in der voll ausgefahrenen Stellung,

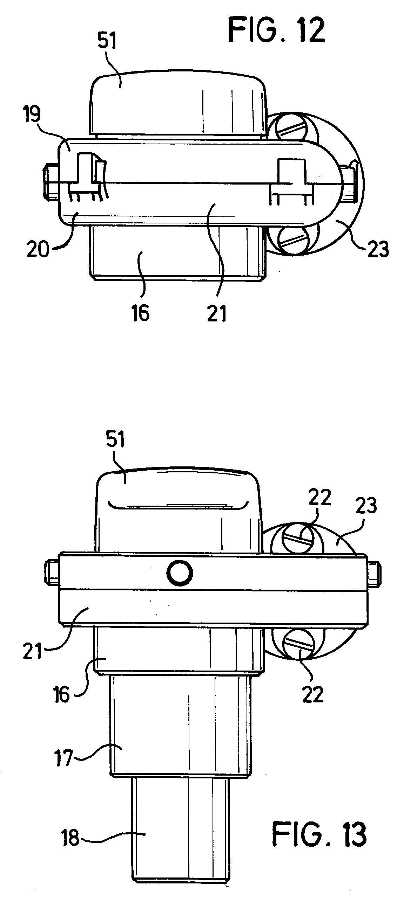

- Fign. 12 u. 13: eine Ansicht der Verstellvorrichtung bei eingefahrener und bei voll ausgefahrener Teleskopwinde sowie

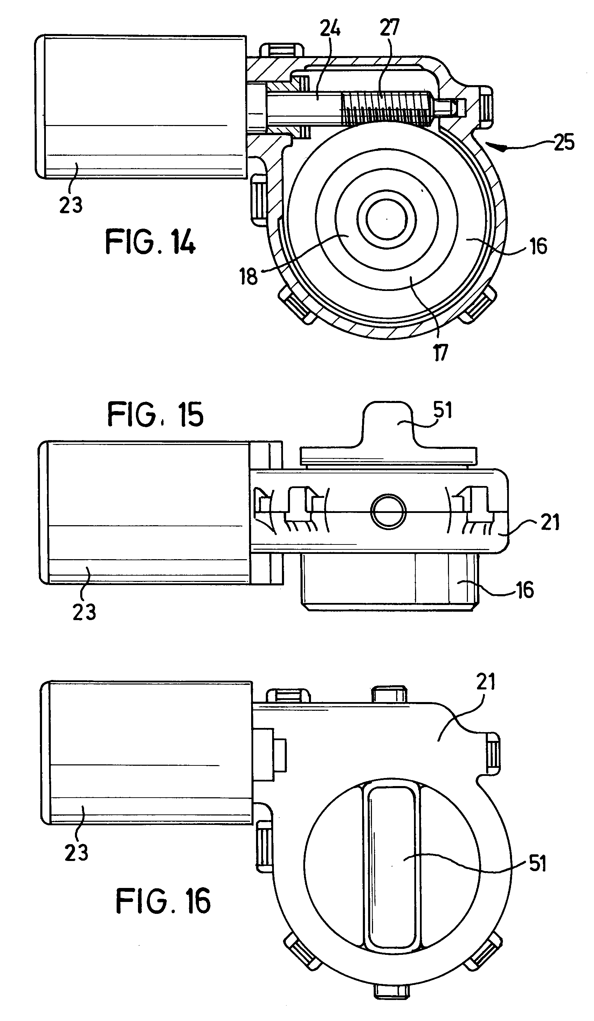

- Fign. 14, 15 u. 16: weitere Ansichten der Verstellvorrichtung von der einen und der anderen Stirnseite der Teleskopwinde aus gesehen (Fign. 14 und 16) bzw. in Seitenansicht (Fig. 15).

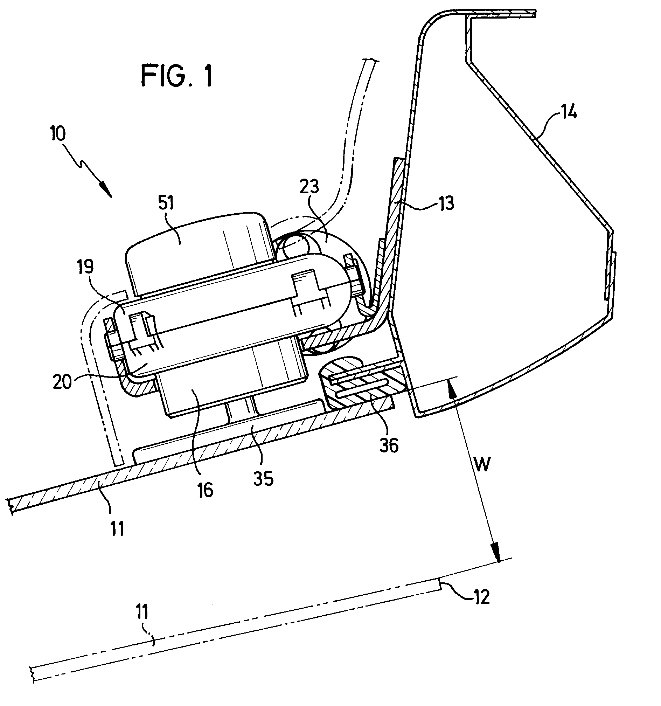

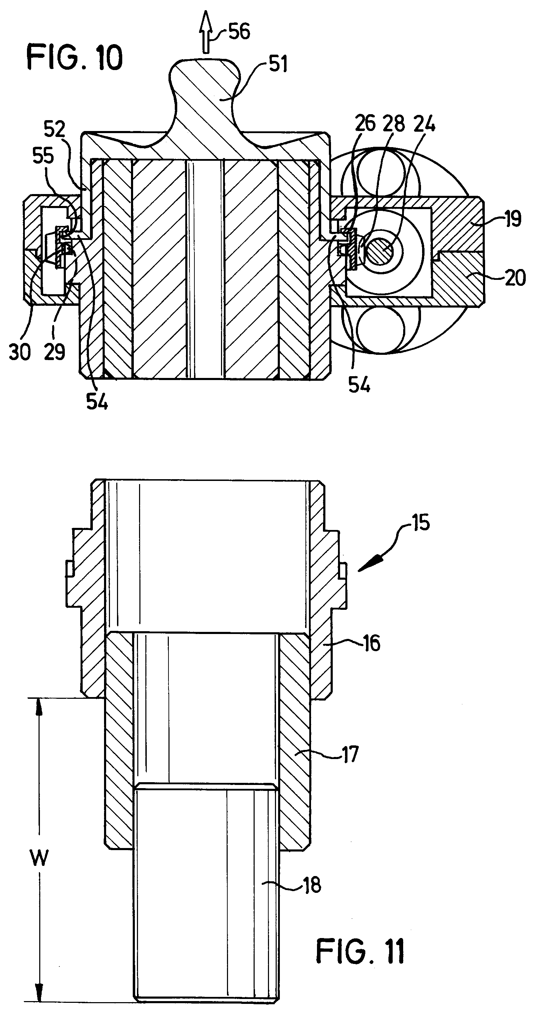

Die in Fig. 1 veranschaulichte, insgesamt mit 10 bezeichnete, Verstellvorrichtung dient dem Verschwenken einer Scheibe 11 eines als Ausstellfenster ausgebildeten Kraftfahrzeug-Seitenfensters. Dabei ist die Scheibe 11 mit ihrem in Fahrtrichtung vorderen Ende zweckmäßig an der Mittelsäule der Fahrzeugkarosserie scharnierartig angelenkt und mittels der am hinteren Ende der Scheibe 11 angreifenden Verstellvorrichtung 10 zwischen der in ausgezogenen Linien dargestellten Schließstellung und einer in strichpunktierten Linien angedeuteten Offenstellung verschwenkbar. Der Ausstellweg W der Hinterkante 12 der Scheibe 11 kann beispielsweise etwa 50 mm betragen. Die Verstellvorrichtung 11 ist mittels einer Halterung 13 an der hinteren Säule 14 des Fahrzeugs angebracht. Sie weist eine Teleskopwinde 15 auf, die im veranschaulichten Ausführungsbeispiel mit drei buchsenförmigen Gewindeteilen, und zwar einem äußersten Gewindeteil 16, einem mittleren Gewindeteil 17 und einem innersten Gewindeteil 18, versehen ist. Das äußerste Gewindeteil 16 ist in einem aus zwei Gehäuseteilen 19 und 20 zusammengesetzten Gehäuse 21 drehbar und gegen eine Verstellung in axialer Richtung gesichert gelagert. An dem Gehäuse 21 ist über Schrauben 22 ein Antriebsmotor 23, insbesondere ein Elektromotor, angebracht. Der Antriebsmotor 23 weist eine als Schneckenwelle ausgebildete Abtriebswelle 24 auf. Die Abtriebswelle 24 bildet einen Teil eines Schneckengetriebes 25. Zu dem Schneckengetriebe 25 gehört ferner ein Zahnring 26, der koaxial zu der Teleskopwinde 15 angeordnet ist. Der Zahnring 26 trägt an seiner Außenumfangsfläche eine mit einem Schneckengewinde 27 der Abtriebswelle 24 in Eingriff stehende Schneckenradverzahnung 28 sowie an seiner Innenumfangsfläche eine Kerbverzahnung 29. Der Zahnring 26 ist mit Bezug auf das äußerste Gewindeteil 16 axial verschiebbar gelagert, wobei seine Kerbverzahnung 29 normalerweise mit einer entsprechenden Kerbverzahnung 30 auf der Außenumfangsfläche des äußersten Gewindeteils 16 in Eingriff steht (Fig. 10).

Die Gewindeteile 16, 17 und 18 haben alle im wesentlichen die gleiche Länge, wobei in der Schließstellung der Scheibe das mittlere Gewindeteil 17 das innerste Gewindeteil 18 koaxial umgreift und seinerseits von dem äußersten Gewindeteil 16 koaxial umschlossen ist. Die Gewindeteile 16, 17, 18 sind ineinander schraubbar. Für diesen Zweck trägt das äußerste Gewindeteil 16 nahe seinem der Scheibe 11 zugewendeten Ende zwei radial nach innen vorragende Stifte 31, die einander diametral gegenüberstehen. Jeder der Stifte 31 greift in einen von zwei untereinander gleichen, jedoch gegeneinander in Umfangsrichtung um 180° versetzten Gewindegängen 32 an der Außenumfangsfläche des mittleren Gewindeteils 17 ein. In das mittlere Gewindeteil 17 sind nahe seinem der Scheibe 11 zugewendeten Ende zwei radial nach innen vorragende Stifte 33 eingesetzt, die gleichfalls einander diametral gegenüberstehen. Die Stifte 33 stehen mit jeweils einem von zwei Gewindegängen 34 in der Außenumfangsfläche des innersten Gewindeteils 18 in Eingriff. Die beiden Gewindegänge 34 sind einander gleich, jedoch in Umfangsrichtung des Gewindeteils 18 um 180° gegeneinander versetzt. Das innerste Gewindeteil 18 ist über ein Befestigungsstück 35 mit der Scheibe 11 fest verbunden. Die Scheibe 11 wird in der Schließstellung gegen eine rahmenfeste Dichtung 36 angedrückt.

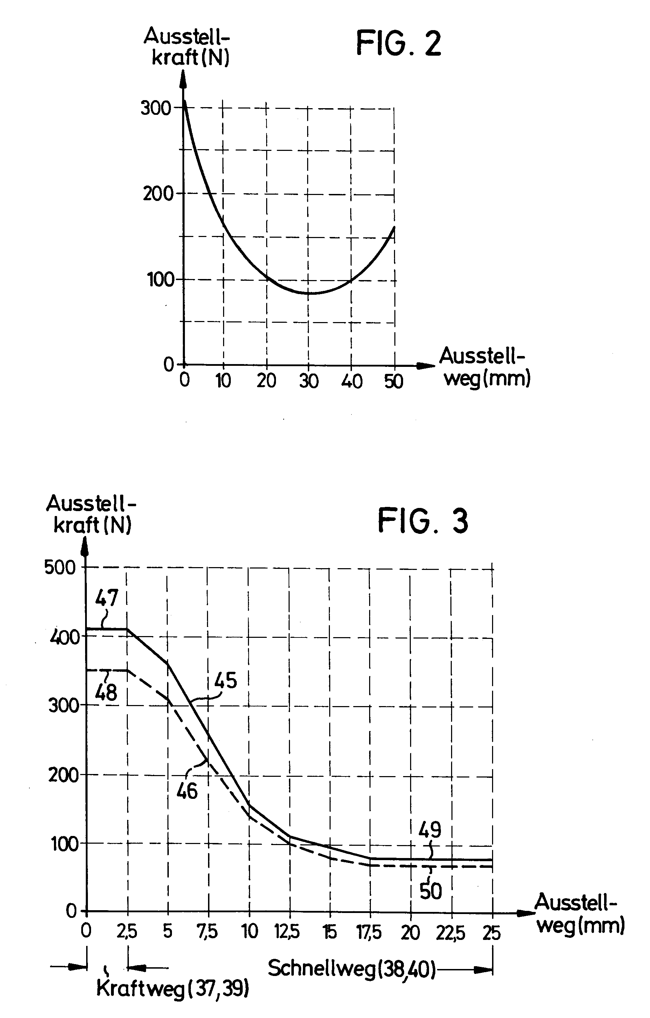

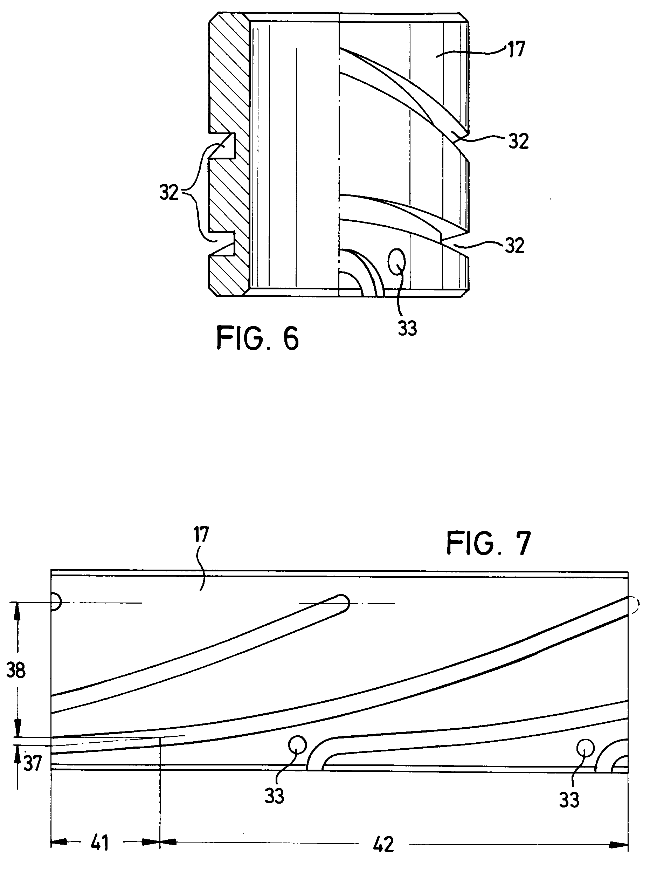

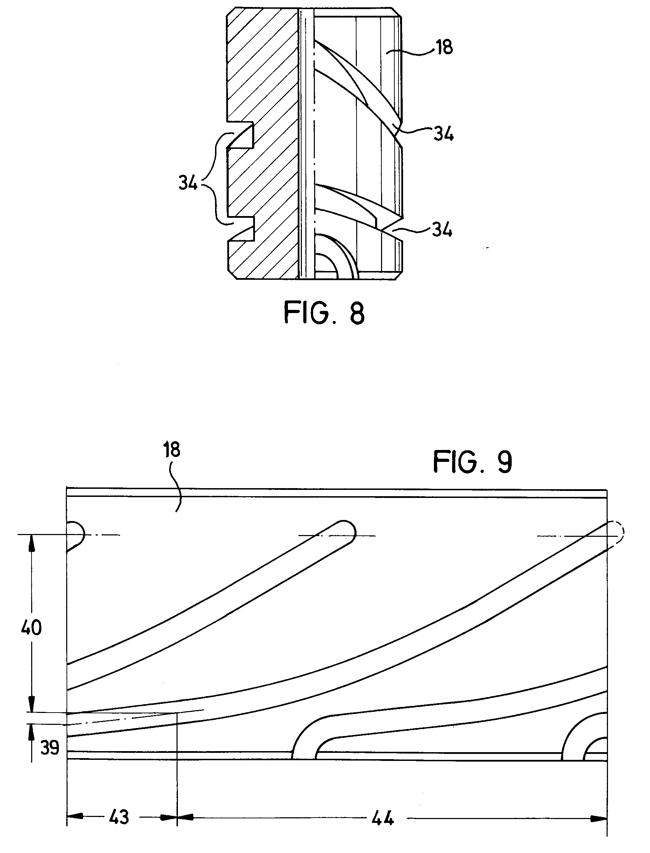

Die zum Verstellen der Scheibe 11 über den Ausstellweg W erforderliche Kraft ist in der Praxis nicht konstant, sondern hat bei einem seitlichen Ausstellfenster eines Kraftfahrzeuges beispielsweise den in Fig. 2 skizzierten Verlauf. Aus Fig. 2 ist insbesondere zu erkennen, daß eine relativ hohe Schließkraft nur auf den letzten zwei bis drei Millimetern der Schließbewegung benötigt wird, nämlich dann, wenn die Scheibe 11 gegen die Dichtung 36 gezogen wird. Dieser Kraft/Weg-Abhängigkeit wird dadurch Rechnung getragen, daß die Gewindegänge 32 und 34 eine ungleichförmige Steigung haben, so daß die Teleskopwinde 15 bei einem Drehen der Abtriebswelle 24 mit konstanter Geschwindigkeit pro Zeiteinheit unterschiedliche Verstellwege in Abhängigkeit davon ausführt, an welcher Stelle der Gewindegänge 32 die Stifte 31 bzw. an welcher Stelle der Gewindegänge 34 die Stifte 33 stehen. Bei der veranschaulichten Ausführungsform ist der gesamte Ausstellweg W (Fign. 1 und 11) auf die Gewindeteilgruppe 16, 17 und die Gewindeteilgruppe 17, 18 hälftig verteilt, und jede der beiden Gewindeteilgruppen 16, 17 und 17, 18 sorgt ihrerseits für einen Kraftweg 37 bzw. 39 und einen Schnellweg 38 bzw. 40 (Fign. 7 und 9). Den Kraftwegen 37 und 39 entsprechen Gewindegangabschnitte 41 und 43 mit geringerer Steigung, während den Schnellwegen 38 und 40 Gewindegangabschnitte 42 und 44 mit größerer Steigung entsprechen. Auf diese Weise wird für die Gewindeteilgruppe 16, 17 die in Fig. 3 mit 45 bezeichnete Kraft/Weg-Kennlinie erhalten, während die Kraft/Weg-Kennlinie der Gewindeteilgruppe 17, 18 bei 46 veranschaulicht ist. Wie dargestellt, haben beide Kennlinien 45 und 46 einen Abschnitt 47, 48, über den hinweg eine im wesentlichen konstante maximale Verstellkraft aufgrund der konstanten geringen Gewindegang-Steigung im Abschnitt 41 bzw. 43 bei entsprechend niedriger Verstellgeschwindigkeit aufgebracht wird. Am anderen Ende der Kennlinien 45 und 46 befinden sich Abschnitte 49 und 50, über die hinweg eine im wesentlichen konstante minimale Verstellkraft bei maximaler Verstellgeschwindigkeit entsprechend der konstanten großen Steigung der Gewindegänge 32 und 34 in dem von den Abschnitten 41 bzw. 43 abliegenden Bereichen erzeugt wird. Dazwischen erfolgt ein allmählicher Übergang der Verstellkraft und damit auch der Verstellgeschwindigkeit.

Ohne zusätzliche Vorkehrungen ist wegen der über die Lebensdauer der Verstellvorrichtung hinweg unterschiedlichen Reibungsverhältnisse innerhalb der Gewindeteilgruppen der Teleskopwinde nicht sicherzustellen, daß entweder zuerst das mittlere Gewindeteil 17 oder zuerst das innere Gewindeteil 18 voll ausfährt bzw. voll einfährt, bevor die Verstellbewegung des jeweils anderen Gewindeteils beginnt. Infolgedessen ist vorliegend die Unterteilung in Kraftweg und Schnellweg für beide Gewindeteile 17 und 18 vorgesehen. Dadurch ist gewährleistet, daß am Ende des Verstellweges W in Schließrichtung immer eine hohe Verstellkraft aufgebracht wird, unabhängig davon, ob in diesem letzten Teilstück der Schließbewegung das Gewindeteil 17 und/oder das Gewindeteil 18 verstellt wird. Grundsätzlich ist es aber auch möglich, durch eine vorliegend nicht dargestellte Zusatzmechanik eine vorgegebene Reihenfolge für die Verstellbewegungen der Gewindeteile 17 und 18 zu erzwingen. In einem solchen Fall braucht ein Kraftweg nur von der Gewindeteilgruppe aufgebracht zu werden, die für den letzten Teil der Verstellung in Schließrichtung erforderlich ist. Es versteht sich im übrigen, daß durch entsprechende Wahl des Steigungsverlaufs der Gewindegänge auch für andere Formen der Kraft/Weg-Kennlinien gesorgt werden kann, als sie in Fig. 3 veranschaulicht sind. In Abhängigkeit von den in der Praxis auftretenden Anforderungen kann unter Anwendung des geschilderten Prinzips in jedem Fall für eine Optimierung von Verstellkraft, Verstellweg und Verstellzeit gesorgt werden.

Die Teleskopwinde 15 trägt an der von der Scheibe 11 abliegenden Seite einen Handgriff 51. Der Handgriff 51 ist mit dem äußersten Gewindeteil 16 drehfest verbunden, jedoch mit Bezug auf dieses in Axialrichtung verstellbar gelagert. Dabei greift der Handgriff 51 mit vier axial vorstehenden Ansätzen 52 in entsprechende Ausnehmungen 53 an der Außenumfangsfläche des Gewindeteils 16. Jeder der Ansätze 52 trägt an seinem freien Ende einen radial nach außen vorspringenden Steg 54. Die Stege 54 greifen in eine Ringnut 55 an der Innenumfangsfläche des Zahnrings 26.

In der in Fig. 10 veranschaulichten Normalstellung des Handgriffes 51 wird Antriebskraft von dem Antriebsmotor 23 über das Schneckengetriebe 25 und die Kerbverzahnungen 29, 30 auf die Teleskopwinde 15 übertragen. Wird jedoch der Handgriff 51 von Hand in Richtung des Pfeils 56 in Fig. 10 verstellt, wird über die Stege 54 der Zahnring 26 in Axialrichtung mitgenommen. Die Kerbverzahnungen 29 und 30 kommen außer Eingriff, während der Eingriff zwischen der Schneckenradverzahnung 28 und dem Schneckengewinde 27 aufrechterhalten bleibt. Die Teleskopwinde 15 wird dadurch von dem Antriebsmotor 23 und dem vorzugsweise selbsthemmend ausgebildeten Schneckengetriebe 25 abgekuppelt. Dies erlaubt es z.B. bei einem Ausfall der Bordspannung oder bei einem Versagen des Antriebsmotors 23 eine leichtgängige Notbetätigung der Teleskopwinde 15 von Hand vorzunehmen.

Während vorstehend eine motorisch angetriebene Verstellvorrichtung beschrieben wurde, kann ohne wesentliche Änderungen eine handbetätigte Verstellvorrichtung dadurch erhalten werden, daß der Handgriff 51 mit der Antriebsseite der Teleskopwinde 15 fest verbunden wird. Beispielsweise kann für diesen Zweck der Handgriff an dem äußersten Gewindeteil der Teleskopwinde einstückig angeformt sein. Das Gewindeteil 16 und der Handgriff 51 können jedoch auch als gesonderte Bauteile ausgebildet sein, die dann in zweckentsprechender Weise in feste gegenseitige Verbindung gebracht werden. Bei einer solchen handbetätigten Verstellvorrichtung entfallen der Antriebsmotor 23, das Schneckengetriebe 25 und der Zahnring 26.

Die erläuterte Stellvorrichtung 10 eignet sich selbstverständlich nicht nur für das Ausstellen von Kraftfahrzeug-Seitenfenstern, sondern auch für das Verstellen anderer bewegbarer Fahrzeugteile, beispielsweise des Deckels eines Hubdaches.

Allen skizzierten Alternativen ist gemeinsam, daß mit relativ niedrigen Antriebsleistungen hohe Verstellkräfte in dem Bereich aufgebracht werden können, in dem solche Kräfte notwendig sind, gleichwohl aber der Gesamtverstellweg relativ rasch durchlaufen werden kann. Die beschriebene Mechanik ist aber auch im Hinblick auf den Einklemmschutz besonders günstig, weil große und damit gefährliche Verstellkräfte erst in einem Bereich des Gesamtverstellweges erzeugt werden, bei dem sich das verstellbare Teil seiner Schließstellung schon so weit (beispielsweise auf zwei bis drei Millimeter) genähert hat, daß praktisch keine Einklemmgefahr mehr besteht.

Es versteht sich, daß die Erfindung nicht auf Teleskopwinden mit drei Gewindeteilen beschränkt ist. Vielmehr kommen auch Teleskopwinden mit anderen Anzahlen von Gewindeteilen ohne weiteres in Betracht. Ferner kann die beschriebene Art der Notbetätigung ungeachtet der im Einzelfall vorgesehenen Ausbildung der Teleskopwinde eingesetzt werden.

## Patentansprüche

1. Vorrichtung zum Verstellen von bewegbaren Teilen an Fahrzeugen insbesondere von Scheiben, Hubdächern oder dergleichen, mit einer Teleskopwinde (15), die mindestens drei teleskopartig ineinander schraubbare Gewindeteile (16,17,18) aufweist, von denen mindestens zwei (16,17) Führungsstücke (31,33) tragen, die in Gewindegänge (32,34) jeweils eines anderen Gewindeteils eingreifen, wobei die Teleskopwinde antriebsseitig gegen eine axiale Verstellung gesichert und von Hand oder motorisch drehbar sowie abtriebsseitig gegen Drehung gesichert und an das bewegbare Fahrzeugteil (11) angekoppelt ist, **dadurch gekennzeichnet**, daß die Gewindesteigung aller mit einem Führungsstück (31,33) zusammenwirkenden Gewindegänge (32,34) der Teleskopwinde (15) über mindestens einen Teil ihrer Erstreckung derart ungleichförmig ausgebildet ist, daß die Kraft-/Weg-Kennlinie (45,46) der Teleskopwinde (15) an die beim Verstellen des bewegbaren Fahrzeugteils (11) auftretende Kraft-/Weg-Abhängigkeit angepaßt ist.

2. Vorrichtung nach Anspruch 1, **dadurch gekennzeichnet**, daß die Gewindegänge (32,34) in dem für das Aufbringen hoher Verstellkräfte sorgenden Abschnitt (41,43) eine geringere Steigung als in einem Bereich eines Gewindegangabschnittes (42,44) aufweisen, der für ein Verstellen des bewegbaren Fahrzeugteils (Scheibe 11) mit vergleichsweise geringer Verstellkraft, aber erhöhter Verstellgeschwindigkeit bestimmt ist.

3. Vorrichtung nach Anspruch 1 oder 2, **dadurch gekennzeichnet**, daß die Teleskopwinde (15) antriebsseitig normalerweise an einen Antriebsmotor (23) angekuppelt ist, für eine Notbetätigung aber von dem Antriebsmotor abgekuppelt und von Hand verstellt werden kann.

4. Vorrichtung nach einem der vorhergehenden Ansprüche, **dadurch gekennzeichnet**, daß das äußerste Gewindeteil (16) die Antriebsseite der Teleskopwinde (15) bildet und die Abtriebsseite der Teleskopwinde von dem innersten Gewindeteil (18) gebildet ist.

5. Vorrichtung nach einem der vorhergehenden Ansprüche, **dadurch gekennzeichnet**, daß die Teleskopwinde (15) mit einem Antriebsmotor (23) über ein Untersetzungsgetriebe, insbesondere ein Schneckengetriebe (25), verbunden ist.

6. Vorrichtung nach Anspruch 5, **dadurch gekennzeichnet**, daß der Antriebsmotor (23) eine als Schneckenwelle ausgebildete Abtriebswelle (24) aufweist.

7. Vorrichtung nach Anspruch 5 oder 6, **dadurch gekennzeichnet**, daß die Abtriebswelle (24) des Antriebsmotors (23) in ständigem Eingriff mit einem koaxial zu der Teleskopwinde (15) angeordneten Zahnring (26) steht, der normalerweise seinerseits mit der Teleskopwinde in Antriebsverbindung steht, jedoch im Bedarfsfall in eine Stellung verschiebbar ist, in welcher die Antriebsverbindung zwischen dem Zahnring und der Teleskopwinde unterbrochen ist.

8. Vorrichtung nach Anspruch 7, **dadurch gekennzeichnet**, daß auf dem äußersten Gewindeteil (16) ein mit diesem Gewindeteil drehfest verbundener Handgriff (51) axial verstellbar angeordnet ist, der mit dem Zahnring (26) für eine Mitnahme in axialer Richtung gekuppelt ist, um den Zahnring wahlweise in oder außer Eingriff mit dem äußersten Gewindeteil zu bewegen.

9. Vorrichtung nach Anspruch 7 oder 8, **dadurch gekennzeichnet**, daß der Zahnring (26) eine an die Abtriebsseite des Antriebsmotors (26) ständig angekoppelte Mitnehmereinrichtung (Schneckenradverzahnung 28) und eine Mitnehmeranordnung (Kerbverzahnung 29) trägt, die mit einer Mitnehmeranordnung (Kerbverzahnung 30) an der Antriebsseite der Teleskopwinde (15) wahlweise in und außer Eingriff bringbar ist.

10. Vorrichtung nach Anspruch 9, **dadurch gekennzeichnet**, daß der Zahnring (26) an seiner Außenumfangsfläche eine mit einem Schneckengewinde (27) der Abtriebswelle (24) des Antriebsmotors (23) ständig in Eingriff stehende Schneckenradverzahnung (28) und an seiner Innenumfangsfläche eine Kerbverzahnung (29) trägt, die mit einer Kerbverzahnung (30) auf der Außenumfangsfläche des äußersten Gewindeteils (16) wahlweise in und außer Eingriff bringbar ist.

11. Vorrichtung nach einem der vorhergehenden Ansprüche, **dadurch gekennzeichnet**, daß die Vorrichtung (10) selbsthemmend ausgelegt ist.
